# EUROPEAN PATENT APPLICATION

(11) **EP 4 807 967 A1**
(43) Date of publication of application: **16.09.2026**
(21) Application number: 25196848.3
(22) Date of filing: 19.08.2025
(51) Int. Cl.: H02M 3/335, H02M 1/00, H02M 3/00

(54) **A POWER CONVERTER**

(30) Priority: 13.03.2025 EP 25163429; 09.07.2025 EP 25188589
(71) Applicant: Infineon Technologies Austria AG, 9500 Villach (AT)
(72) Inventor: IOB, Federico, 33100 Udine (IT); RIZZOLATTI, Roberto, 9523 Villach (AT); SAGGINI, Stefano, 33100 Udine (IT); URSINO, Mario, 9500 Villach (AT); DEBOY, Gerald Josef, 9061 Klagenfurt (AT)
(74) Representative: Infineon Patent Department

(57) **Abstract**

The disclosed concepts relate to a power converter comprising a plurality of converter paths, each converter path comprising an input node, an output node, a first winding, and a second winding. The first winding is coupled in series between the input node and the second winding, and the second winding is coupled in series between the first winding and the output node. Each converter path is configured to conduct current in a same direction between the input node and the output node. The power converter further comprises one or more cores. Each winding of each converter path is inductively coupled to a winding of a different converter path by extending through a respective hole of one of the cores thereby forming a respective pair of inductively coupled windings. At least two of the pairs of inductively coupled windings extend through a same core.

## Description

### TECHNICAL FIELD

The present disclosure generally relates to a power converter, and methods for operating the power converter.

### BACKGROUND

Power converters (i.e., voltage regulators) that convert a 48V to a digital load voltage are typically based on a two-stage approach. A two-stage approach exploits the benefit of high step-down capability and high-power density of an unregulated Intermediate Bus Converter (IBC), while a second stage, which is typically designed with a buck converter, enables regulation at digital load level. To meet footprint requirements, high switching frequency operation is needed both in the first and second stages. However, high frequency operation leads to higher losses.

Moreover, various digital loads (e.g. microprocessors, accelerators, ASICs) have high current demands and strenuous transient requirements. In some cases, currents of up to 1000A at voltages of around 0.75V are required. At these levels, parasitic components may deteriorate dynamic performance of the converter rapidly, while also impairing the power conversion efficiency due to distribution losses.

There is hence a need to provide a power converter, particularly for powering modern processors, with high power density and good transient performance.

### SUMMARY

According to one aspect, there is provided a power converter.

The power converter comprises a plurality of converter paths, each converter path comprising an input node, an output node, a first winding, and a second winding. The first winding is coupled in series between the input node and the second winding, and the second winding is coupled in series between the first winding and the output node. Each converter path is configured to conduct current in a same direction between the input node and the output node. The power converter further comprises one or more cores. Each winding of each converter path is inductively coupled to a winding of a different converter path by extending through a respective hole of one of the cores thereby forming a respective pair of inductively coupled windings. At least two of the pairs of inductively coupled windings extend through a same core.

According to another aspect of the present disclosure, there is provided a method for operating the power converter disclosed herein.

The method comprises generating a plurality of phase inputs using an input voltage; providing each phase input to different respective input nodes of the converter paths; and receiving an output voltage from the output nodes.

Those skilled in the art will recognize additional features and advantages upon reading the following detailed description, and upon viewing the accompanying drawings.

### BRIEF DESCRIPTION OF THE DRAWINGS

Examples are explained below with reference to the drawings. The drawings serve to illustrate certain principles, so that only aspects necessary for understanding these principles are illustrated.
FIG. 1 presents a circuit diagram of a power converter;
FIG. 2 presents a circuit diagram of a power converter including a core shared between pairs of inductively coupled windings, according to an embodiment;
FIG. 3 presents an isometric view of a power converter including a monolithic core, according to an embodiment;
FIG. 4 presents an isometric view of a power converter including a monolithic core, according to another embodiment;
FIG. 5A presents an isometric view of a power converter including a monolithic core, according to a further embodiment;
FIG 5B presents a circuit diagram according to an embodiment;
FIG. 5C presents an isometric view of a power converter with coupled switching networks;
FIG. 6A presents a side view of a power converter provided on a single substrate;
FIG. 6B presents a side view of a power converter provided between two substrates, one for connection to input nodes and one for connection to output nodes;
FIG. 6C presents a side view of a power converter provided between two substrates, one for connection to a first converter path and one for connection to a second converter path;
FIG. 7 is a flow diagram for a method for operating a power converter, according to an additional embodiment.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The disclosed concepts relate to a power converter comprising a plurality of converter paths, each converter path comprising an input node, an output node, a first winding, and a second winding. The first winding is coupled in series between the input node and the second winding, and the second winding is coupled in series between the first winding and the output node. Each converter path is configured to conduct current in a same direction between the input node and the output node. The power converter further comprises one or more cores. Each winding of each converter path is inductively coupled to a winding of a different converter path by extending through a respective hole of one of the cores thereby forming a respective pair of inductively coupled windings. At least two of the pairs of inductively coupled windings extend through a same core.

Thus, there is provided a circular voltage regulator (i.e., a circular power converter) having a plurality of coupled inductors (i.e., pairs of inductively coupled windings) that extend through respective holes of at least one core of magnetically permeable material. In some embodiments, each of the pairs of inductively coupled windings extend through holes of a single, monolithic core. This simplifies construction of the power converter, facilitating a compact and energy dense build. In addition, in some embodiments, this may result in magnetic coupling between pairs of inductively coupled windings - thereby strengthening the coupling between converter paths.

Viewed from another perspective, a power converter comprising N converter paths may be constructed with one or more magnetic cores (e.g., with a relative permeability greater than 30). The one or more magnetic cores feature N holes in total - or N tunnels extending through the magnetic core. The holes may take the form of various shapes, and may depend on the shape and size of the core. In a first embodiment, each hole may extend in a same direction (e.g., a vertical direction). In other embodiments, each hole may extend in different directions in a same plane (e.g., a horizontal plane). Through each hole is provided one pair of inductively coupled windings - or a first winding of one converter path and a second winding of another converter path, which may both carry power to a same load. Thus, the surrounding core and each corresponding first winding and second winding form a coupled inductor, which may in some cases be interpreted as an elemental transformer.

As alluded to, since multiple pairs of inductively coupled windings are integrated into a same magnetic core, there will naturally be magnetic coupling between them. This coupling can be categorized into two distinct types:
- Strong coupling: this occurs between the first and second windings of a same pair (i.e., of a coupled inductor, or of a same elemental transformer), which are provided in a same hole of the core, resulting in a coupling coefficient greater than 0.5.
- Weak coupling: This occurs between windings that are built within the same magnetic core but are not provided to the same hole, as they belong to different pairs of inductively coupled windings, resulting in a coupling coefficient of less than 0.5.

Accordingly, not only does a shared core for pairs of inductively coupled windings provide for compact and potentially simplified construction of the power converter, it also facilitates coupling between usually uncoupled windings. This increased strength of coupling of the converter paths, potentially improving transient response of the power converter. Furthermore, by utilizing a same core, a generally higher magnetizing inductance may be realized without affecting operation of the power converter, which may be useful for various applications (e.g., when powering a high current load, such as a digital load).

To best understand the disclosure, it is useful to first appreciate the operation of a power converter, also known as a circular power converter or circular voltage regulator. The power converter comprises a plurality of converter paths that are coupled in a circular manner. More specifically, each converter path comprises an input node, a first winding, a second winding, and an output node, coupled such that each first winding provided in series between the input node and the second winding of the same converter path, and the second winding is provided in series between the first winding and the output node of the same converter path. Each converter path is configured to conduct current in a same direction between the input node and the output node. In addition, each one winding of a first converter path is inductively coupled to a winding of a second converter path, thereby forming a pair of inductively coupled windings. Each pair of inductively coupled windings form a coupled inductor, also referred to as an elemental transformer. As each converter path conducts current in a same direction, a DC flux induced in the first winding of each converter path is cancelled/compensated by the current flowing through the second winding coupled to the respective first winding. Equally, a DC flux induced in the second winding of each converter path is cancelled/compensated by the current flowing through the first winding coupled to the respective second winding.

The cancellation of the DC flux between pairs of inductively coupled windings (i.e. between first windings and respective second windings) depends on a magnitude of the currents in these windings. As the coupled windings belong to separate converter paths, and thus separate current path, the respective currents depend on the duty cycle, the overlap of duty cycles and the corresponding phase shift between input phase voltages provided to input nodes of these neighboring converter paths. The cancellation effect of the DC flux depends consequently on electrical parameters of the individual parallel converter paths. By tuning the phase shift and the overlap of duty cycles, the cancellation effect of coupled windings can be controlled. In case of incomplete cancellation, the current difference will create a magnetic flux, which corresponds to an additional inductance. In other words, phase shift and overlap of duty cycles provide an effective means of controlling the inductance of the power converter, and to control hence the dynamic response quality of the power converter. For example, by firing all phases simultaneously, the overlap of phases is maximized at a phase difference of zero. The cancellation effect is maximized, and the inductance of the power converter is minimal.

Hence, the power converter provides a magnetic structure that may exhibit improved transient response and power density when powering a high current load (e.g., a digital load).

In other words, the power converter provides a plurality of coupled inductors (or elementary transformers, depending on the perspective taken), formed by coupling of two windings of different converter paths. Each coupled inductor/elementary transformer is coupled in series, with each coupled inductor having windings exposed to current from two different converter paths (with each current having a different direction) thereby cancelling DC flux. As a result, a voltage regulator (i.e., a power converter) with good transient response and power density may be realised. In contrast to the trans-inductor voltage regulator (TLVR), the power converter does not require a single TLVR path that can experience high resistive losses. Instead, DC resistance is balanced across the power converter. Further, as each elementary transformer does not experience a DC flux, a core may be smaller, and in the case of some disclosed embodiments, may be shared between pairs of windings. The circular multi-phase magnetic structure of the voltage regulator therefore effectively couples all connected input phases, similarly to a zero-bias TLVR, but without sharing a common winding among all the phases.

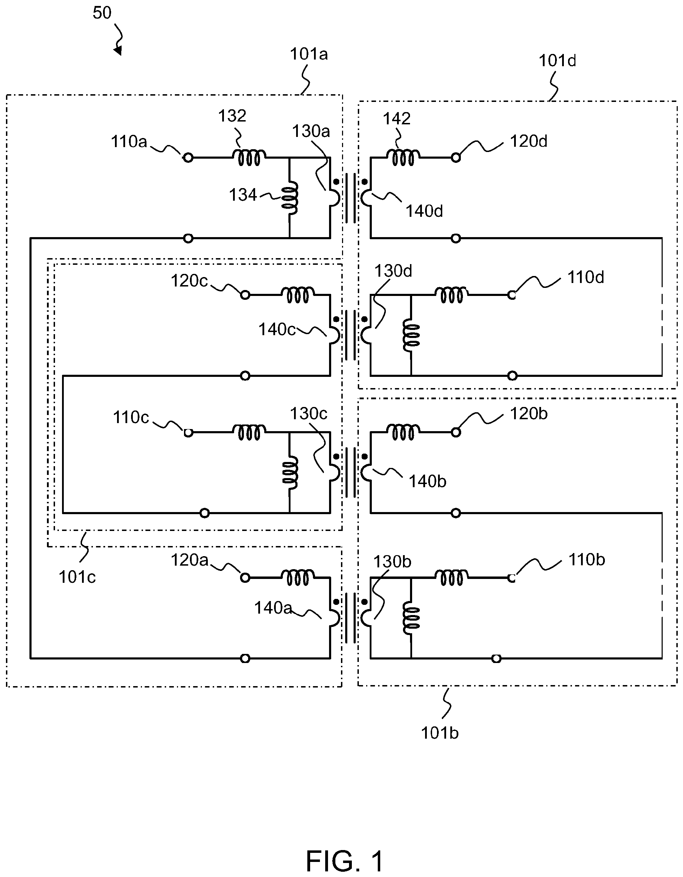

FIG. 1 presents a circuit diagram of such a power converter 50.

As shown, the power converter 50 comprises a plurality of converter paths 101a-d. Each converter path 101a-d comprises an input node 110a-d, an output node 120a-d, a first winding 130a-d, and a second winding 140a-d. The first winding 130a-d of each converter path 101a-d is coupled in series between the input node 110a-d and the second winding 140a-d of the respective converter path. The second winding 140a-d of each converter path 101a-d is coupled in series between the first winding 130a-d and the output node 120a-d of the respective converter path 101a-d.

Each converter path 101a-d is configured to conduct current in a same direction between the input node 110a-d and the output node 120a-d. That is, all of the converter paths 101a-d conduct current from their respective input node 110a-d to their respective output node 120a-d, or all of the converter paths 101a-d conduct current from their respective output node 120a-d to their respective input node 110a-d.

Every first winding 130a-d is inductively coupled to a second winding 140a-d of a different converter path 101a-d. That is, it is never the case that the first winding 130a-d of a converter path 101a-d is inductively coupled to the second winding 140a-d of the same converter path 101a-d. Thus, in the depicted embodiment, each first winding 130a-d of the converter paths 101a-d is inductively coupled to a second winding 140a-d of a different converter path 101a-d. Alternatively, in another embodiment, the first winding 130a-d of each converter path 101a-d may be inductively coupled to a first winding of a different converter path 130a-d, and the second winding 140a-d of each converter path 101a-d may be inductively coupled to a second winding of a different converter path 101a-d, given that the windings are wrapped around the core in different directions, thereby cancelling magnetic flux induced by current flowing through the windings. As a result, each pair of inductively coupled windings is coupled to each other pair of inductively coupled windings in a series loop (at least indirectly via another pair of inductively coupled windings). For example, a first winding 130a of a first converter path 101a may be inductively coupled to a second winding 140b of a second converter path 101b thereby coupling the first converter path 101a to the second converter path 101b, a first winding 130b the second converter path 101b may be inductively coupled to a second winding 140c of a third converter path 101c thereby coupling the second converter path 101b to the third converter path 101c, a first winding 130c of the third converter path 101c may be inductively coupled to a second winding 140d of a fourth converter path 101d thereby coupling the third converter path 101c to the fourth converter path 101d, and a first winding 130d of the fourth converter path 101d may be inductively coupled to a second winding 140a of the first converter path 101a thereby coupling the fourth converter path 101d to the first converter path 101a.

Accordingly, in this example, each of the first to fourth converter paths 101a-d are coupled in a series loop by the inductive coupling of the windings. Of course, it is worth noting that there may be fewer converter paths (e.g., three converter paths), or more converter paths (e.g., five converter paths). In any case, the same principle applies with the first windings 130a-d inductively coupled to second windings 14a-d of a different converter path 101a-d, with each pair of inductively coupled windings being coupled in a closed chain loop.

To be clear, each pair of inductively coupled windings depicted in FIG. 1 is presented in the form of an elemental transformer equivalent circuit. This may be considered when the DC flux is cancelled in each of the first windings 130a-d and the second windings 140a-d. Nevertheless, interpretation of the present power converter should not be restricted to a series of elemental transformers. From another perspective, each pair of inductively coupled windings may be considered to be a coupled inductor - as it may be possible that some DC flux is present in the windings. Nevertheless, for sake of simplicity of interpretation, in FIG. 1 each first winding 130a-d is shown with a primary leakage inductance 132, each second winding 140a-d is shown with a second leakage inductance 142, and a magnetizing inductance 134 of each pair of windings is shown in parallel with each first winding 130a-d.

A magnetizing inductance 134 of each pair of inductively coupled windings may be significantly higher than a leakage inductance 132 of the respective first winding 130a and a leakage inductance 142 of the second winding 140d. For example, the magnetizing inductance 134 of each pair of inductively coupled windings may be at least ten times greater than each leakage inductance 132, 142. Nonetheless, other ratios between the magnetizing inductance and leakage inductance are possible.

Furthermore, the inductively coupled first winding 130a-d and second winding pairs 140a-d may include a same number of turns. In other words, each first winding 130a-d may be coupled to a second winding 140a-d having a same number of turns. Accordingly, a turns ratio may be close to unity. Indeed, this will also mean that, for each converter path 101a-d, the first winding 130a-d and the second winding 140a-d belonging to the same converter path 101a-d will have a same number of turns. This may ensure that each converter path 101a-d has a similar direct current resistance.

Nevertheless, it should be noted that the turns ratio may not be unity - for example when one of the converter paths 101a-d receives a different magnitude of current to the other converter paths 101a-d. That is, each of the windings may not have the same number of turns.

For instance, when one of the converter paths 101a receives a current of a smaller magnitude than the other converter paths 101b-d, then the first winding 130a and the second winding 140a of said converter path 101a may have a greater number of turns than the first windings 130b-d and the second windings 140b-d of the other converter paths 101b-d to ensure balanced operation of the power converter.

By way of simplified example, (for a power converter with four converter paths) given that three of the converter paths receive a 20A current and one of the converter paths receive a 10A current, the converter path receiving the 10A current may have a first winding and second winding with double the number of turns (e.g., 2 turns) compared to the first winding and second winding of the converter paths receiving the 20A currents. More generally, the number of turns of the first winding and second winding of each converter path multiplied by the current provided to the respective converter path will equal a constant, the constant being the same for each converter path.

Thus, for each least one of the converter paths 101a-d, the first winding 130a-d and second winding 140a-d of the converter path 101a-d may include a first number of turns. And, for at least one other converter path 101a-d, the first winding 130a-d and second winding 140a-d of the converter path 101a-d may include a second number of turns different to the first number of turns.

An advantage of the power converter 50, is that the converter paths 101a-d may be similar and/or arranged in a circular manner. More specifically, each first winding 130a-d may be similar to each other first winding 130a-d, and each second winding 140a-d may be similar to each other second winding 140a-d. Furthermore, each of the converter paths 101a-d may have a similar length (e.g., the connections between the input node 110a-d, the first winding 130a-d, the second winding 140a-d, and the output node 120a-d of each converter path 101a-d may be a similar length). As a result, each of the converter paths 101a-d may have a substantially similar direct current resistance. This leads to improved balance of the converter, with a good transient response. Indeed, in contrast to the zero-bias TLVR described above, this may be the case no matter how many phases are provided.

Furthermore, as the current through the first winding 130a-d and the current through the paired second winding 140a-d in different directions, a DC magnetic flux may be cancelled. Thus, from the perspective of each pair of inductively coupled windings, no steady state DC flux is provided. This means that each pair of inductively coupled windings does not require a large core to accommodate such DC flux. Thus, a power density of the voltage regulator is improved.

The input node 110a-d of each of the converter paths 101a-d may be coupled to respective phase inputs. When there is a load jump (i.e. an increase in the current/power required by a load coupled to the output nodes), a duty cycle of the voltage provided by one or more of the phase inputs may be increased. As each of the converter paths 101a-d are linked, an increase in current provided in one phase input leads to an increase of output current of all converter paths 101a-d. To be clear, each of the output nodes 120a-d of the plurality of converter paths 101a-d may be coupled to a common output node for connection to a load.

To be clear, each phase input may have different input voltage magnitudes and frequencies.

As a result of this power converter structure, an AC magnetic flux through each pair of inductively coupled windings only depend on a frequency of the voltage provided by each phase input, and on the voltage required by the load coupled to the output nodes.

Moreover, the phase inputs provided to each of the input nodes 110a-d may be provided by respective switching networks. The switching networks 112a-d may be driven by a controller to provide an appropriate AC voltage to each input node. In other words, each of the input nodes 110a-d of the converter paths may be coupled to respective switching networks. Any switching network that can receive an input voltage, and provide an alternating output voltage may be employed. In further examples, one or more of the input nodes may be coupled to an injection circuit.

Each switching network may be identical, or may be dissimilar, depending on the application. Therefore, to be clear, each switching network may be coupled to a different input voltage, and may provide a phase input having different frequencies.

In one example. each switching network may comprise a high side switch coupled between a common input voltage and the input node of the respective converter path, and a low side switch coupled between the input node of the respective converter path and a reference voltage. The reference voltage of each switching network may be ground, or may be a positive or negative reference potential. The power converter 100-3 may therefore be implemented with classic buck converters coupled to the respective input nodes 110a-d of each converter path. Each input node 110a-d may be coupled to a half-bridge between a DC input voltage and a reference potential (e.g., ground potential). This implementation may be particularly suited for when high current is needed for a low voltage load. This would enable zero-bias within each pair of inductively coupled windings during any load condition.

As can be seen, for the power converter 50 of FIG. 1, an individual core is provided for each pair of inductively coupled windings. The core formed of magnetically permeable material may be wrapped around each first winding 130a-d and second winding 140a-d pair. That is, the first winding 130a-d and the second winding 140a-d of a given pair may extend through a hole of a magnetically permeable core.

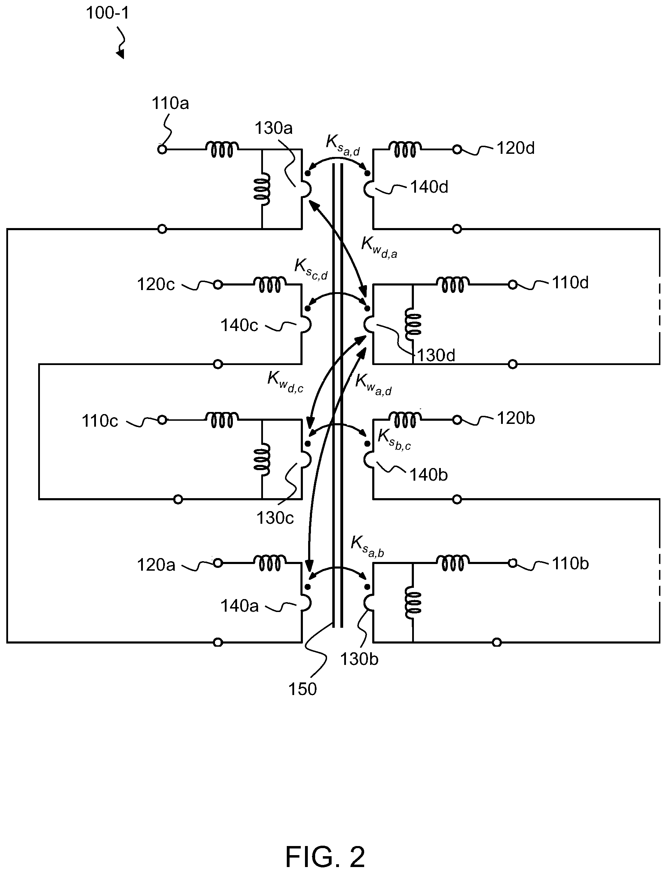

FIG. 2 presents a circuit diagram of a power converter 100-1 including a core shared between pairs of inductively coupled windings, according to an embodiment. Repeated description of similar features to the power converter 50 of FIG. 1 is omitted for the sake of brevity. However, in contrast to the power converter 50 of FIG. 1, the power converter 100-1 comprises a single monolithic core 150 for each pair of inductively coupled windings.

Of course, this is meant by way of example only, and the power converter 100-1 according to other embodiments may comprise multiple magnetic cores, with at least one of the cores shared between some of the pairs of inductively coupled windings. For example, the power converter 100-1 may equally comprise two magnetic cores, each having two holes and two respective pairs of inductively coupled windings extending therethrough.

In the depicted case, each first winding 130a-d of the converter paths 101a-d is inductively coupled to a second winding 140a-d of a different converter path 101a-d by extending through a respective hole of the core thereby forming a respective pair of inductively coupled windings. In other embodiments, each first winding 130a-d of the converter paths 101a-d is inductively coupled to another first winding 130a-d of another converter path 101a-d by extending through a respective hole of the core thereby forming a respective pair of inductively coupled windings, and each second winding 140a-d of the converter paths 101a-d is inductively coupled to another second winding 140a-d of another converter path 101a-d by extending through a respective hole of the core thereby forming a respective pair of inductively coupled windings, given the coupled windings are wound in opposite direction around the core 150. That is, each pair of inductively coupled windings/each coupled inductor is provided through a different hole of the core.

The core of magnetically permeable material therefore comprises a number of holes extending therethrough. Each hole is provided with a coupled inductor extending through the hole. The holes may be dimensioned in a variety of ways. In some embodiments, some (or all) of the holes may extend in a same direction, such as a direction perpendicular to a plane of the core (i.e., a vertical direction).

In other embodiments some (or all) of the holes may extend in different directions. In this case, some (or all) of the holes may be provided in a same plane - such as a plane perpendicular to the vertical direction. Nevertheless, the holes may have more complex geometries than simply extending in a single dimension, and may be generally curved, twisted, or meandering in shape.

The monolithic core, in some embodiments, may consist of multiple separate cores that are provided in proximity to each other. That is, there may be provided individual cores for (i.e., wrapped around) each pair of inductively coupled windings, but at least two of these individual cores are placed in proximity to each other (without a material preventing magnetic coupling separating them). This may magnetically couple these separate individual cores, forming a single effective core.

As can be seen in FIG. 2, the use of a single monolithic core may magnetically couple pairs of inductively coupled windings extending through the same core. This magnetic coupling will be weaker, but still significant, for those windings which are physically more distant than the windings forming each pair of inductively coupled windings. For example, the coupling coefficient between the primary winding 130a-d and the secondary winding 140a-d forming each same pair of inductively coupled windings may be greater than 0.5, and wherein the coupling coefficient between windings forming different pairs of inductively coupled windings extending through the same core is less than 0.5.

For simplicity and clarity, FIG. 2 does not include the coupling coefficients between all possible permutations of windings. This omission is intended to streamline the visualization and avoid excessive complexity in the diagram. Nevertheless, this highlights the coupling coefficients associated with the strong coupling between the windings of each pair of inductively coupled windings (i.e., between each coupled inductor/elemental transformer). Specifically, these coupling coefficients represent the interaction between consecutive converter paths (i.e., between converter path a and d, a and b, b and c, and c and d) and are summarized using the notation *k_{s x,y}.* Moreover, the weak coupling coefficients between the first winding of converter path d, and other windings of the power converter 100-1 are presented, using the notation k_{w x,y}.

A first perspective to describe the proposed power converter constructed within a monolithic core is to view it as a series of interconnected coupled inductors. Each coupled inductor comprises of a first and second winding that exhibit strong mutual coupling. Additionally, the windings of these individual coupled inductors may also exhibit weaker coupling with windings belonging to other coupled inductors within the same monolithic core.

A second perspective to describe the proposed power converter is to view it as a magnetic system in which all the converter paths are effectively electrically coupled. This electrical coupling is similar to the configuration of a TLVR, but without a shared common winding among all the converter paths. This behavior arises due to two main phenomena: the first is the voltage propagation within the chain connection, which is determined by the primary leakage inductance associated with the windings belonging to the same coupled inductor. The second phenomenon is determined by the leakage inductance arising from the windings that do not belong to the same coupled inductor.

A third perspective to describe the proposed power converter is to view it as a system that allows for a magnetic flux density that does not depend on the DC current sunk by the switching network coupled to the input nodes, but is solely dependent on the output voltage potential coupled to the output nodes, the input voltage coupled to the input nodes, and the switching frequency of the switching network coupled to the input nodes. This is of paramount importance to consider, since such a structure enables high-current power stages with small core sizes further reduced by the chance to contain everything within the same monolithic core.

A fourth perspective to describe the proposed power converter is that it represents a system capable of utilizing a shared magnetic core area among different converter paths. This configuration enables a generally higher magnetizing inductance for each coupled inductor without increasing the core size (for a given relative permeability) without affecting the general behavior of the power converter. In comparison, discrete elemental transformers that are magnetically separated would require a larger core to achieve similar inductance values.

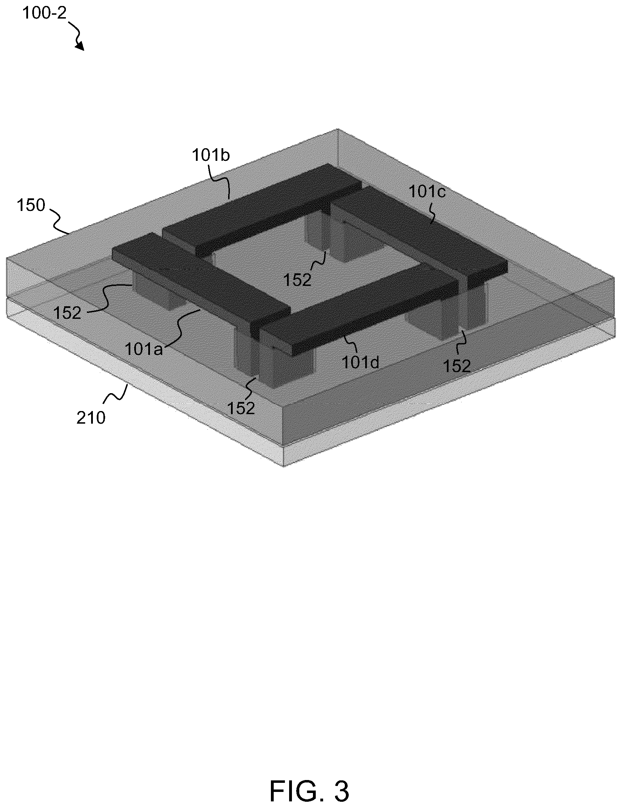

FIG. 3 presents an isometric view of a power converter 100-2 including a monolithic core, according to an embodiment. That is, an example physical structure of a power converter 100-2 as shown in FIG. 2.

The power converter 100-2 comprises four converter paths 101a-d, similar to the power converter 100-1 depicted in the circuit diagram of FIG.2. Labelling of the first winding and second winding is omitted for clarity of the image. Nevertheless, the first and second windings can be seen as the elements (e.g., conductive bars) of each converter path 101a-d that extend vertically into holes 152 of the monolithic core 150. An element outside (i.e. on top of) the core 150 connects each first winding to each second winding. Input and output nodes are routed on substrate 210.

It can be seen that a single core 150 of magnetically permeable material is provided with four holes 152, into which each pair of inductively coupled windings (i.e., first and second windings of each coupled inductor or elemental transformer) are inserted. These windings are coupled to a bottom substrate 210 that may host switching network (e.g., a half-bridge embedded in the laminate) and the output voltage connections to the input nodes and output nodes of each converter path.

Additionally, it is evident that a horizontal routing (i.e., in the plane of the monolithic core) of the holes 152 would be significantly longer than the vertical routing (i.e., perpendicular to the plane of the monolithic core) of this power converter 100-2. This applies for power converters targeting a very thin magnetic layer to form backside vertical power modules with a very low overall height. These vertical power modules may be used in high performance computing applications.

This design choice is crucial for maintaining a certain level of leakage inductance, which helps minimize steady state current ripple. Furthermore, the low thickness core design may be beneficial to ensure maximum contact area with a heat spreader that could be provided covering the top, thereby reducing thermal resistance between the substrate and the top windings, effectively optimizing thermal performance.

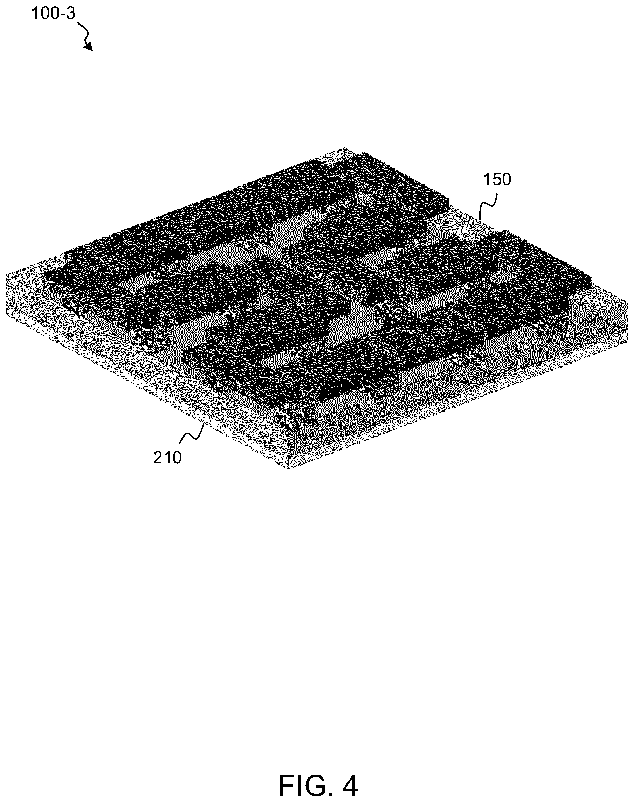

FIG. 4 presents an isometric view of a power converter including a monolithic core, according to another embodiment. In contrast to the power converter 100-2 of FIG. 3, the power converter 100-3 comprises sixteen converter paths. Labelling of the converter paths is omitted for clarity of illustration, but may be considered similar to the elements shown in FIG. 3.

As shown a single core 150 of magnetic material with sixteen holes is provided, into which the first and second windings of each converter path are inserted. These windings are coupled to a bottom substrate 210 which may host the switching network (e.g., a half-bridge embedded in the laminate) and the output voltage connections of a same load.

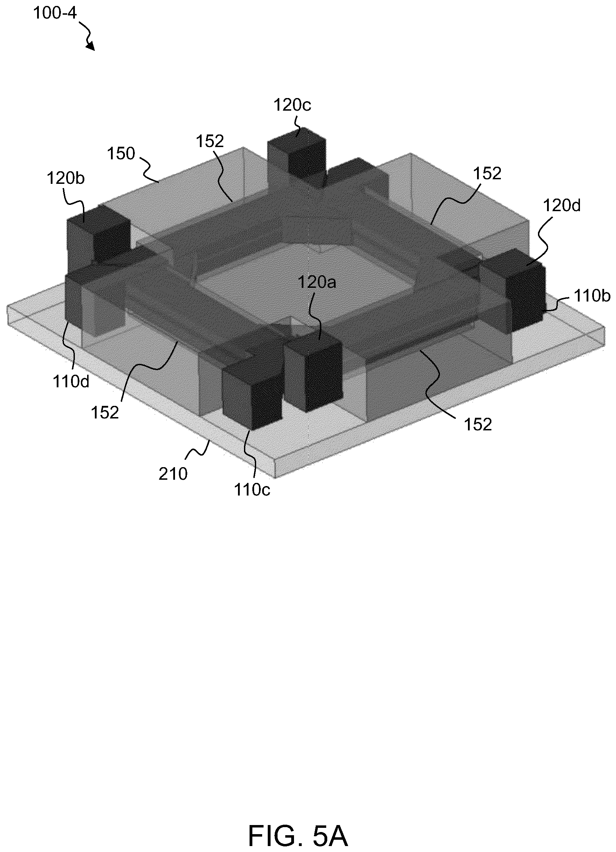

FIG. 5A presents an isometric view of a power converter 100-4 including a monolithic core, according to a further embodiment. In this embodiment, the holes 152 of the monolithic core 150 extend in different directions, and each hole 152 extends in a same plane (which is substantially parallel to the plane of the core 150). The first and second windings of each converter path (not labelled for clarity of illustration) therefore pass through the holes in these different directions. This results in a compact power converter 100-4.

It is also worth noting that the input node 110a-d of each converter path (110a not shown in the image) is provided on a substrate 210, and the output node 120a-d of each converter path is provided upward, for connection to a substrate (not shown) on top of the power converter 100-4. This enables a vertical power flow.

In other words, in this configuration, the connection to switching networks are positioned at the bottom of the figure, while the output voltage connections are located at the top. This arrangement clearly demonstrates vertical power delivery within the same monolithic core 150. In such case the magnetic coupling is accomplished in the horizontal direction, while the vertical connection allows to deliver the power to a common output node located in a different substrate on the top side.

To be clear, in power converter 100-4, the current coming from each input node flows along two sides of the outer dimensions of the structure. To ensure horizontal current cancelling, this current needs to be cancelled with two separate phases and by currents flowing in opposite directions.

However, in the power converter 100-4, two of the four side currents coming from an input node cancel each other. The two other side currents flowing towards the output node cancel each other. Therefore, in contrast to FIG.2, the two serially coupled areas with secondary windings are exchanged.

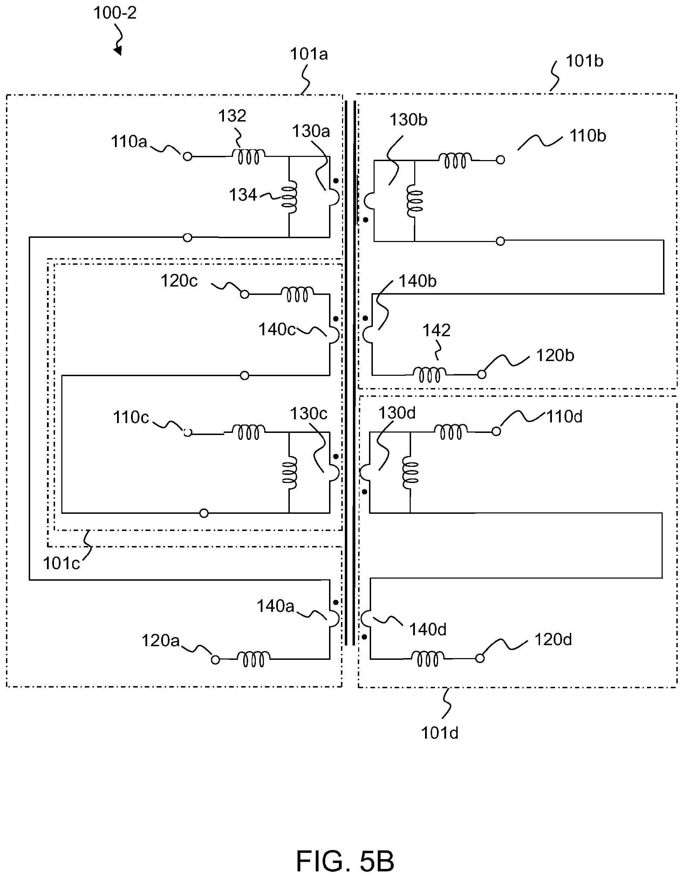

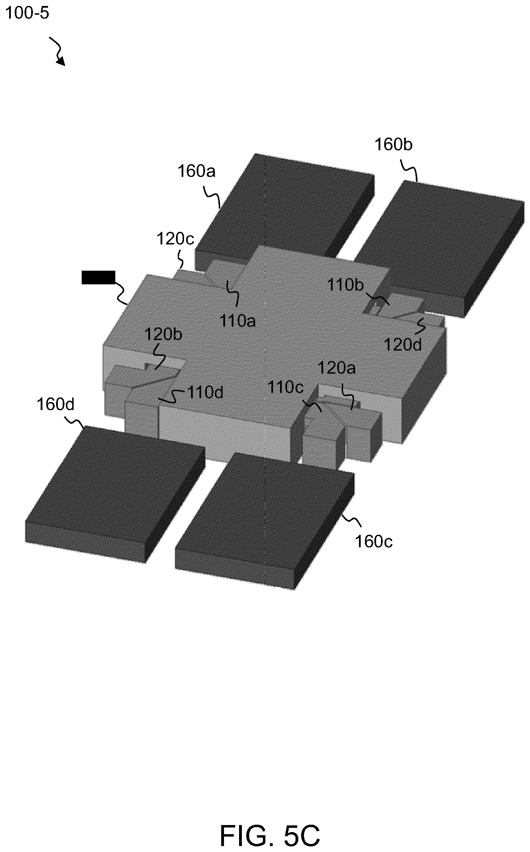

The corresponding circuit of the power converter 100-4 is shown in FIG. 5B. It is evident from the drawings that in this case a lower level of symmetry is achieved. While in Figure 2 all four coupling areas look the same, in the case of Figure 5 two coupling areas are shown, where currents coming from the switching network at input nodes 110a-d cancel each other, while on the two other sides of the embodiment of Figure 5A currents flowing towards the output nodes 120a-d cancel each other.

Accordingly, the circuit 100-2 presents primary windings 130a-d coupled to each other, and secondary windings 140a-d coupled to each other. Further, it should be noted that the winding directions of each coupled pair of windings are opposite each other, in order to ensure current cancelling. In this case all current pathes a-d are coupled to each other as described in the previous embodiments.

FIG. 5C presents an isometric view of another power converter 100-5 including a monolithic core, according to an additional embodiment. In this embodiment, similarly to the power converter 100-4, the holes (not shown for clarity of illustration) of the monolithic core 150 extend in different directions, and each hole extends in a same plane (which is substantially parallel to the plane of the core 150). Like before, the first and second windings of each converter path (not labelled for clarity of illustration) therefore pass through the holes in these different directions. This results in a compact power converter 100-5, which may have a particularly thin form factor.

In contrast to power converters depicted previously (which show input nodes 110a-d that may be coupled to switching networks mounted above or below the power converter), power converter 100-5 has the capability to connect the input nodes 110a-d to switching networks which are mounted laterally on the substrate. This may provide a particularly thin structure compared to other embodiments where the windings are coupled in a direction perpendicular to the plane of the monolithic core and/or where the input and output nodes are coupled/routed to elements above or below the power converter.

As shown in FIG. 5C, the switching networks 160a-d are coupled to input nodes 110 a-d, and are mounted laterally on a substrate (e.g., a PCB board, or the motherboard). Input node 110a is coupled to switching network 160a, input node 110b is coupled to switching network 160b, input node 110c is coupled to switching network 160c, and input node 110d is coupled to switching node 160d. The output nodes 120a-d face different sides of the power converter to the input nodes and may be coupled to output lines running along the combination of power stages and magnetic structure.

Nevertheless, it would be obvious to a person skilled in the art, that the arrangement of power stages can be freely chosen from a lateral arrangement or a stacked vertical arrangement. The embodiment showing four coupled phases can be extended to any number of phases as outlined in this invention. The lateral arrangement of power stages can use both windings being coupled to each other in a direction in the plane of the core as well as in a direction perpendicular to the plane of the core.

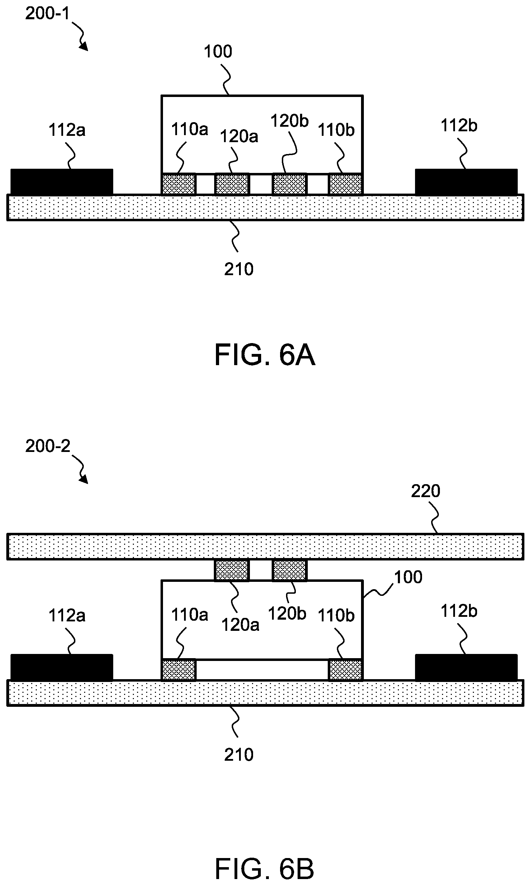

FIG. 6A presents a side view of a power converter 100 provided on a single substrate 210. This depicts a so-called down solution, which provides a power converter on a single substrate, with all connections to and from the power converter handled via the substrate.

As shown, a power converter 100 is provided. The power converter 100 may be provided within a monolithic core, as described above. Alternatively, the power converter 100 may be similar to that described in relation to FIG. 1. In any case, the power converter 100 is provided in a format for placement on a substrate or PCB.

Input nodes 110a-b and output nodes 120a-b are provided for connection to the substrate 210. The substrate 210 may provide traces for routing connections between the input nodes 110a-b and output nodes 120a-b with other components. Of course, the power converter 100 may comprise more input nodes 110a-b and output nodes 120a-b, but only two are shown here for the sake of clarity and simplicity.

For example, switching networks 112a-b are also provided on the substrate 210 and may be coupled to input nodes 110a-b via conductive traces. These switching networks 112a-b may provide the phased input voltages, thus driving the power converter 100. The output nodes 120a-b may be routed to a load (not shown), which is either provided on the substrate 210, or as a separate device coupled to the substrate 210.

FIG. 6B presents a side view of a power converter 100 provided between two substrates 210, 220, one for connection to input nodes 110a-b and one for connection to output nodes 120a-b. This depicts a so-called vertical solution and is increasingly favored for reduction in power delivery network impedance toward the load.

As before, a power converter 100 is provided, which may be provided within a monolithic core, as described above. Alternatively, the power converter 100 may be similar to that described in relation to FIG. 1. In any case, the power converter 100 is provided in a format for placement on a substrate or PCB. Of course, the power converter 100 may comprise more input nodes 110a-b and output nodes 120a-b, but only two are shown here for sake of clarity and simplicity.

The input nodes 110a-b are provided for connection to the first/lower substrate 210. The substrate 210 may provide traces for routing connections between the input nodes 110a-b and other components. For example, switching networks 112a-b are also provided on the substrate 210 and may be coupled to input nodes 110a-b via conductive traces. These switching networks 112a-b may provide the phased input voltages, thus driving the power converter 100. In this case, the input nodes 110a-b are provided on one side of the power converter 100 for connection to the substrate 210.

The output nodes 120a-b are provided for connection to the second/upper substrate 220. The output nodes 120a-b may be routed to a load (not shown), which is either provided on the substrate 220, or as a separate device coupled to the substrate 220.

Accordingly, switching networks 112a-b are placed on a separate substrate 210 to the substrate 220 of the output nodes 120a-b (and thus potential coupled output load), in an effort to increase current density.

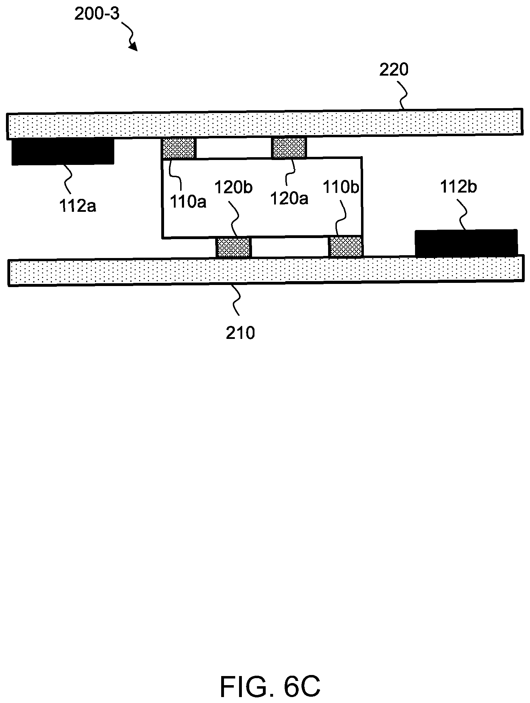

FIG. 6C presents a side view of a power converter 100 provided between two substrates 210, 220, one for connection to a first converter path and one for connection to a second converter path. This is a mixed approach of the implementations of FIGS. 6A and 6B.

As before, a power converter 100 is provided, which may be provided within a monolithic core, as described above. Alternatively, the power converter may be similar to that described in relation to FIG. 1. In any case, the power converter 100 is provided in a format for placement on a substrate or PCB. Of course, the power converter 100 may comprise more input nodes 110a-b and output nodes 120a-b, but only two are shown here for sake of clarity and simplicity.

One of the input nodes 110b and one of the output nodes 120b are configured for connection to a first/lower substrate 210, whilst another of the input nodes 110a and another of the output nodes 110b are configured for connection to a second/upper substrate 220. Switching networks 112a-b for respective input nodes are provided on associated substrates.

Of course, a variety of different formats are possible, as would be appreciated by the skilled person.

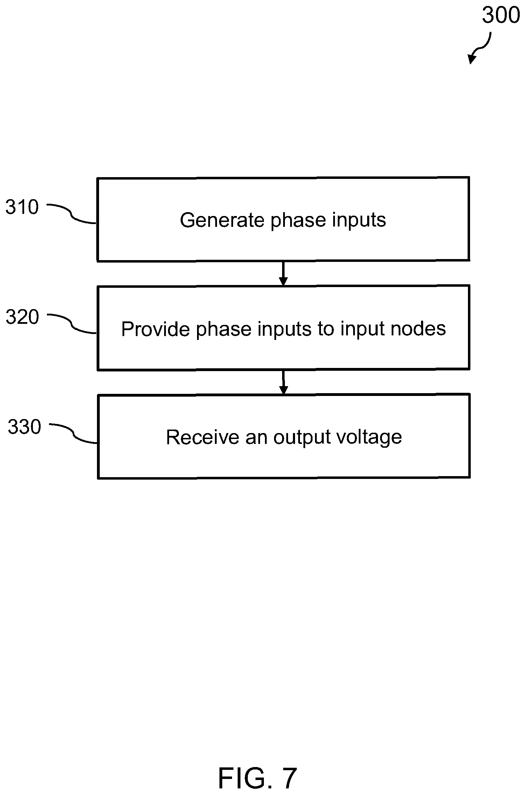

FIG. 7 presents a flow diagram of a method 300 for operating a power converter according to an embodiment. The power converter may be any power converter as discussed herein, comprising a plurality of converter paths.

In step 310, a plurality of phase inputs are generated using an input voltage. That is, an input voltage is used to generate phase inputs. Each phase input may have a same frequency, with a phase offset. Alternatively, the phase inputs may have different frequencies and/or magnitudes. The phase inputs may be generated by any known means, such as by using buck converters.

In step 320, each phase input is provided to different respective input nodes of the converter paths. In other words, the generated phase inputs are provided to the converter paths via the input nodes. Each individual phase input may be provided to a different converter path.

In step 330, an output voltage is received from the output nodes of the converter paths. The output voltage may be received from a common output node formed by connecting each of the output nodes together. The output voltage may then be provided to a load. For example, the load may be a digital node, such as a microprocessor, an accelerator, etc.

Although specific examples have been illustrated and described herein, it will be appreciated by those of ordinary skill in the art that a variety of alternate and/or equivalent implementations may be substituted for the specific examples shown and described without departing from the scope of the present disclosure. This application is intended to cover any adaptations or variations of the specific examples discussed herein. Therefore, it is intended that this disclosure be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

The following embodiments are disclosed:
1. A power converter comprising:
   a plurality of converter paths, each converter path comprising an input node, an output node, a first winding, and a second winding, wherein the first winding is coupled in series between the input node and the second winding, and the second winding is coupled in series between the first winding and the output node, wherein each converter path is configured to conduct current in a same direction between the input node and the output node; and
   one or more cores,
   wherein each winding of each converter path is inductively coupled to a winding of a different converter path each first winding of the converter paths is inductively coupled to a second winding of a different converter path by extending through a respective hole of one of the cores thereby forming a respective pair of inductively coupled windings, and
   wherein at least two of the pairs of inductively coupled windings extend through a same core.
2. The power converter of embodiment 1, wherein the power converter comprises a monolithic core, and wherein all of the pairs of inductively coupled windings extend through the monolithic core.
3. The power converter of embodiment 1 or 2, wherein each of the pairs of inductively coupled windings extend through a different core, and at least two of the cores are placed in proximity to each other, thereby magnetically coupling the cores and creating a single effective core.
4. The power converter of any of embodiments 1-3, wherein the pairs of inductively coupled windings extending through the same core are magnetically coupled to each other.
5. The power converter of any of embodiments 1-4, wherein the coupling coefficient between the primary winding and the secondary winding forming each same pair of inductively coupled windings is greater than any of the coupling coefficients between windings forming different pairs of inductively coupled windings extending through the same core.
6. The power converter of any of embodiments 1-5, wherein the coupling coefficient between the primary winding and the secondary winding forming each same pair of inductively coupled windings is greater than 0.5, and wherein the coupling coefficient between windings forming different pairs of inductively coupled windings extending through the same core is less than 0.5.
7. The power converter of any of embodiments 1-6, wherein at least two of the holes extend in a same direction.
8. The power converter of any of embodiments 1-7, wherein at least two of the holes extend in a different direction.
9. The power converter of any of embodiments 1-8, wherein at least two of the holes extend through the core in a thickness direction of the core.
10. The power converter of any of embodiments 1-9, wherein at least two of the holes extend through the core in a direction perpendicular to the plane of the core.
11. The power converter of any of embodiments 1-10, wherein the input nodes and the output nodes of each converter path are provided on a same side of the core.
12. The power converter of any of embodiments 1-11, wherein the input nodes of each converter path are provided on a first side of the core, and the output nodes of each converter path are provided on a second side of the core different to the first side.
13. The power converter of any of embodiments 1-12, wherein some of the input nodes are provided on a first side of the core, some of the input nodes are provided on the second side of the core different to the first side, some of the output nodes are provided on the first side, and some of the output nodes are provided on the second side.
14. The power converter of any of embodiments 1-13, wherein of the input nodes of the converter paths are coupled to respective switching networks.
15. The power converter of any of embodiments 1-14, wherein each of the output nodes of the plurality of converter paths are coupled to a common output node for connection to a load.
16. A method for operating the power converter of any of embodiments 1-15, comprising:
   generating a plurality of phase inputs using an input voltage;
   providing each phase input to different respective input nodes of the converter paths; and
   receiving an output voltage from the output nodes.

## Claims

1. A power converter (100) comprising:
a plurality of converter paths (100a-d), each converter path comprising an input node (110a-d), an output node (120a-d), a first winding (130a-d), and a second winding (140a-d), wherein the first winding is coupled in series between the input node and the second winding, and the second winding is coupled in series between the first winding and the output node, wherein each converter path is configured to conduct current in a same direction between the input node and the output node; and
one or more cores (150),
wherein each winding of each converter path is inductively coupled to a winding of a different converter path by extending through a respective hole (152) of one of the cores thereby forming a respective pair of inductively coupled windings, and
wherein at least two of the pairs of inductively coupled windings extend through a same core.

2. The power converter of claim 1, wherein the power converter (100) comprises a monolithic core (150), and wherein all of the pairs of inductively coupled windings extend through the monolithic core.

3. The power converter of claim 1 or 2, wherein each of the pairs of inductively coupled windings extend through a different core, and at least two of the cores are placed in proximity to each other, thereby magnetically coupling the cores and creating a single effective core (150).

4. The power converter of any of claims 1-3, wherein the pairs of inductively coupled windings extending through the same core (150) are magnetically coupled to each other.

5. The power converter of claim 4, wherein the coupling coefficient between the primary winding (130a-d) and the secondary winding (140a-d) forming each same pair of inductively coupled windings is greater than any of the coupling coefficients between windings forming different pairs of inductively coupled windings extending through the same core.

6. The power converter of claim 5, wherein the coupling coefficient between the primary winding (130a-d) and the secondary winding (140a-d) forming each same pair of inductively coupled windings is greater than 0.5, and wherein the coupling coefficient between windings forming different pairs of inductively coupled windings extending through the same core is less than 0.5.

7. The power converter of any of claims 1-6, wherein: at least two of the holes (152) extend in a same direction; or at least two of the holes extend in a different direction.

8. The power converter of any of claims 1-7, wherein at least two of the holes (152) extend through the core (150) in a thickness direction of the core.

9. The power converter of any of claims 1-8, wherein at least two of the holes (152) extend through the core (150) in a direction perpendicular to the plane of the core.

10. The power converter of any of claims 1-9, wherein the input nodes (110a-d) and the output nodes (120a-d) of each converter path (101a-d) are provided on a same side of the core (150).

11. The power converter of any of claims 1-9, wherein the input nodes (110a-d) of each converter path (101a-d) are provided on a first side of the core (150), and the output nodes (120a-d) of each converter path are provided on a second side of the core different to the first side.

12. The power converter of any of claims 1-9, wherein some of the input nodes (110a-d) are provided on a first side of the core (150), some of the input nodes are provided on the second side of the core different to the first side, some of the output nodes (120a-d) are provided on the first side, and some of the output nodes are provided on the second side.

13. The power converter of any of claims 1-12, wherein of the input nodes (110a-d) of the converter paths (101a-d) are coupled to respective switching networks (112a-b).

14. The power converter of any of claims 1-13, wherein each of the output nodes (120a-d) of the plurality of converter paths (101a-d) are coupled to a common output node for connection to a load.

15. A method (300) for operating the power converter of any of claims 1-14, comprising:
generating (310) a plurality of phase inputs using an input voltage;
providing (320) each phase input to different respective input nodes of the converter paths; and
receiving (330) an output voltage from the output nodes.

## Amended claims

### Amended claims in accordance with Rule 137(2) EPC.

1. A power converter (100) comprising:
a plurality of converter paths (100a-d), each converter path comprising an input node (110a-d), an output node (120a-d), a first winding (130a-d), and a second winding (140a-d), wherein the first winding is coupled in series between the input node and the second winding, and the second winding is coupled in series between the first winding and the output node, wherein each converter path is configured to conduct current in a same direction between the input node and the output node; and
one or more cores (150),
wherein each winding of each converter path is inductively coupled to a winding of a different converter path by extending through a respective hole (152) of one of the cores thereby forming a respective pair of inductively coupled windings, and
wherein at least two of the pairs of inductively coupled windings extend through a same core, and
wherein the magnetizing inductance of each pair of inductively coupled windings is at least ten times greater than the leakage inductance of the pair of inductively coupled windings.

2. The power converter of claim 1, wherein the power converter (100) comprises a monolithic core (150), and wherein all of the pairs of inductively coupled windings extend through the monolithic core.

3. The power converter of claim 1 or 2, wherein each of the pairs of inductively coupled windings extend through a different core, and at least two of the cores are placed in proximity to each other, thereby magnetically coupling the cores and creating a single effective core (150).

4. The power converter of any of claims 1-3, wherein the pairs of inductively coupled windings extending through the same core (150) are magnetically coupled to each other.

5. The power converter of claim 4, wherein the coupling coefficient between the primary winding (130a-d) and the secondary winding (140a-d) forming each same pair of inductively coupled windings is greater than any of the coupling coefficients between windings forming different pairs of inductively coupled windings extending through the same core.

6. The power converter of claim 5, wherein the coupling coefficient between the primary winding (130a-d) and the secondary winding (140a-d) forming each same pair of inductively coupled windings is greater than 0.5, and wherein the coupling coefficient between windings forming different pairs of inductively coupled windings extending through the same core is less than 0.5.

7. The power converter of any of claims 1-6, wherein: at least two of the holes (152) extend in a same direction; or at least two of the holes extend in a different direction.

8. The power converter of any of claims 1-7, wherein at least two of the holes (152) extend through the core (150) in a thickness direction of the core.

9. The power converter of any of claims 1-8, wherein at least two of the holes (152) extend through the core (150) in a direction perpendicular to the plane of the core.

10. The power converter of any of claims 1-9, wherein the input nodes (110a-d) and the output nodes (120a-d) of each converter path (101a-d) are provided on a same side of the core (150).

11. The power converter of any of claims 1-9, wherein the input nodes (110a-d) of each converter path (101a-d) are provided on a first side of the core (150), and the output nodes (120a-d) of each converter path are provided on a second side of the core different to the first side.

12. The power converter of any of claims 1-9, wherein some of the input nodes (110a-d) are provided on a first side of the core (150), some of the input nodes are provided on the second side of the core different to the first side, some of the output nodes (120a-d) are provided on the first side, and some of the output nodes are provided on the second side.

13. The power converter of any of claims 1-12, wherein of the input nodes (110a-d) of the converter paths (101a-d) are coupled to respective switching networks (112a-b).

14. The power converter of any of claims 1-13, wherein each of the output nodes (120a-d) of the plurality of converter paths (101a-d) are coupled to a common output node for connection to a load.

15. A method (300) for operating the power converter of any of claims 1-14, comprising:
generating (310) a plurality of phase inputs using an input voltage;
providing (320) each phase input to different respective input nodes of the converter paths; and
receiving (330) an output voltage from the output nodes.
